# NEUE EUROPÄISCHE PATENTSCHRIFT

(11) **EP 1 916 164 B2**
(45) Veröffentlichungstag und Bekanntmachung des Hinweises auf die Entscheidung über den Einspruch: **16.03.2016**
(45) Hinweis auf die Patenterteilung: 19.05.2010
(21) Anmeldenummer: 07019315.6
(22) Anmeldetag: 02.10.2007
(51) Int. Cl.: B60S 9/08, B62D 53/08, B66C 23/78

(54) **Höhenverstellbare Hubstütze für Wohnmobile**
Height adjustable support for caravans
Support réglable en hauteur pour caravanes

(30) Priorität: 26.10.2006 DE 202006016410 U
(43) Veröffentlichungstag der Anmeldung: 30.04.2008
(73) Patentinhaber: Laumann, Wilfried, 9320 Arbon (CH)
(72) Erfinder: Laumann, Wilfried, 9320 Arbon (CH)
(74) Vertreter: Siekmann, Gunnar

(56) Entgegenhaltungen:
- EP-A- 0 597 406
- EP-A- 1 238 875
- EP-A1- 1 586 528
- DE-U1- 29 817 050
- DE-U1- 900 281 101
- JP-A- 10 147 217
- US-A- 2 837 312
- US-A- 3 182 957
- US-A- 3 362 683
- US-A- 4 635 904
- US-A- 4 865 295

## Beschreibung

Die Erfindung betrifft eine höhenverstellbare Hubstütze für Wohnmobile gemäß dem Oberbegriff des Anspruchs 1.

Bekannte höhenverstellbare Hubstützen (US 4,635,904) weisen einen am Fahrzeugrahmen festlegbaren Träger auf, an dem ein äußeres Rohr der mit zumindest einem weiteren Innenrohr als teleskopierbare Gruppe ausgebildeten Hubstütze schwenkbar gehalten ist. Zur Schwenkverlagerung dieser Hubstütze sind deren teleskopierbare Rohre durch eine mit einer antreibbaren Gewindespindel zusammenwirkenden Mitnahmevorrichtung verbunden, die zwei in gegenüberliegenden Längsnuten des Außenrohres verschieblich geführte und am oberen Ende des Innenrohres anlegbare Stiftteile als Mitnehmer aufweist. Gemäß EP 0 597 406 ist eine derartige Hubstütze dadurch vereinfacht, daß der Mitnehmer nur noch mit einem einzigen Stegteil einen in Achsrichtung der Stütze verlaufenden Schlitz durchgreift und in einer preisgünstigen Ausführung mit dem inneren Rohr zusammenwirkt.

Eine gattungsgemäße Hubstütze ist aus der US-A-3 182 957 bekannt.

Die Umlenkstange wird durch eine Klammer außenseitig am Außenrohr geführt. Das untere Ende wirkt mit einem Vorsprung an der Bodenplatte zusammen.

Die Erfindung befaßt sich mit dem Problem, eine höhenverstellbare Hubstütze zu schaffen, die mit geringem technischen Aufwand eine Mitnahmeverbindung der beiden Rohrteile ermöglicht und mit einfacheren Bauteilen kostengünstig herstellbar ist.

Die Erfindung löst diese Aufgabe mit einer Hubstütze mit den Merkmalen des Anspruchs 1. Hinsichtlich weiterer Ausgestaltungen wird auf die Ansprüche 2 bis 3 verwiesen.

Bei der erfindungsgemäßen Hubstütze ist eine Mitnahmevorrichtung vorgesehen, die neben der an sich bekannten Spindel-Baugruppe als zentrale Funktionsbaugruppe zur Kraftübertragung und Stabilisierung zusätzlich eine Umlenkstange aufweist. Diese am Träger der Hubstütze gehaltene Baugruppe ermöglicht im Zusammenwirken mit der einen Kegelradantrieb aufweisenden Spindelverstellung eine optimale Mitnahmeverbindung sowohl für die am Tragteil schwenkbare Hubstütze als auch das aus dem Außenrohr teleskopierbare Innenrohr. Die zur Schwenksteuerung der Umlenkstange vorgesehene Stützachse im Bereich des fahrzeugseitigen Trägers durchgreift ein Langloch am oberen Ende der Umlenkstange, so daß eine für die Schwenk- und Schubbewegung einfach nutzbare Verbindung erreicht ist. Die Umlenkstange ist mit geringem Raumbedarf in die Bauteile der Hubstütze integrierbar, so daß eine vor Verschmutzungen geschützte Konstruktion erreicht ist.

Hinsichtlich wesentlicher weiterer Vorteile und Einzelheiten der Erfindung wird auf die nachfolgende Beschreibung und die Zeichnung verwiesen, in der zwei Ausführungsbeispiele des Gegenstands der Erfindung schematisch veranschaulicht sind. In der Zeichnung zeigen:
- Fig. 1: eine perspektivische Vorderansicht der Hubstütze in abgesenkter Stützstellung in einer ersten Ausführung,
- Fig. 2: eine perspektivische Unteransicht der Hubstütze gemäß Fig. 1,
- Fig. 3: eine geschnittene Seitenansicht der Hubstütze gemäß einer Linie III-III in Fig. 1,
- Fig. 4: eine geschnittene Seitenansicht der Hubstütze gemäß einer Linie IV-IV in Fig. 1,
- Fig. 5: eine bekannte Ausführung der Hubstütze ähnlich der Stützstellung in Fig. 1,
- Fig.6: eine Darstellung ähnlich Fig. 5 mit eingezogenem Innenrohr, und
- Fig. 7: eine Schnittdarstellung der Hubstütze gemäß einer Linie VII-VII in Fig. 6.

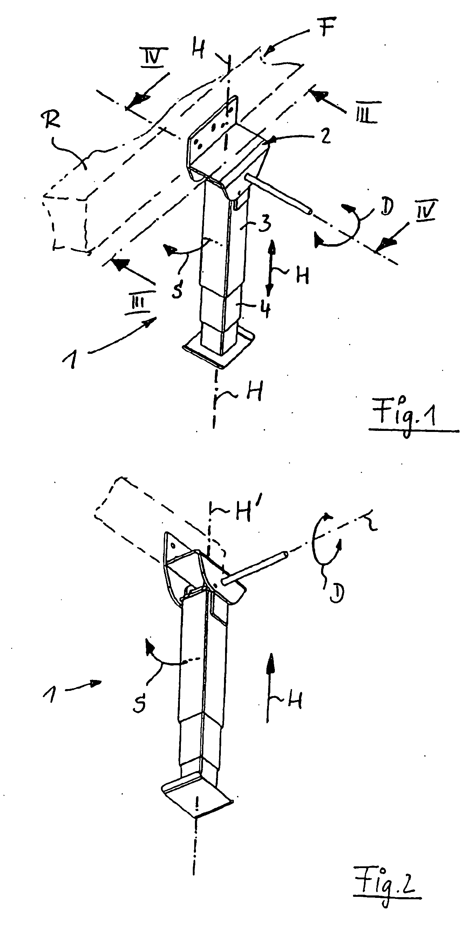

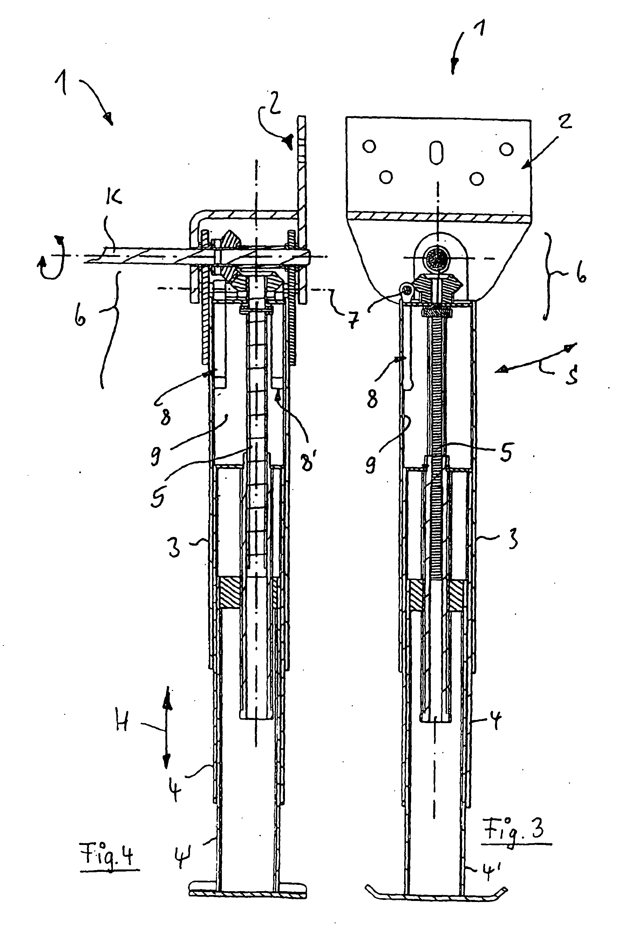

In Fig. 1 ist eine insgesamt mit 1 bezeichnete Hubstütze dargestellt, die insbesondere für Wohnmobile o. dgl. Fahrzeuge F vorgesehen ist. Die Hubstütze 1 weist dabei einen an einem nicht näher dargestellten Rahmen R festlegbaren Träger 2 auf, an dem die ein äußeres Rohr 3 sowie zumindest ein inneres Rohr 4, 4' aufweisende Hubstütze 1 als teleskopierbare Baugruppe festgelegt ist. Die in Fig. 1 bis Fig. 4 in einer ersten Ausführung dargestellte Hubstütze 1 ist in einer Hubrichtung gemäß Pfeil H verstellbar und in einer mit einem Pfeil S angedeuteten Schwenkrichtung in eine Ruhelage im Bereich des Rahmens R verlagerbar. Dabei werden die beiden Rohre 3, 4 durch eine in Fig. 3 und Fig. 4 verdeutlichte Mitnahmerichtung 6 verlagert. Mittels einer Kurbel K ist die Gewindespindel 5 im Bereich der Mitnahmevorrichtung 6 von Hand antreibbar (Drehrichtung D) und zumindest die Verlagerung in Richtung der vertikalen Hochachse H' einleitbar.

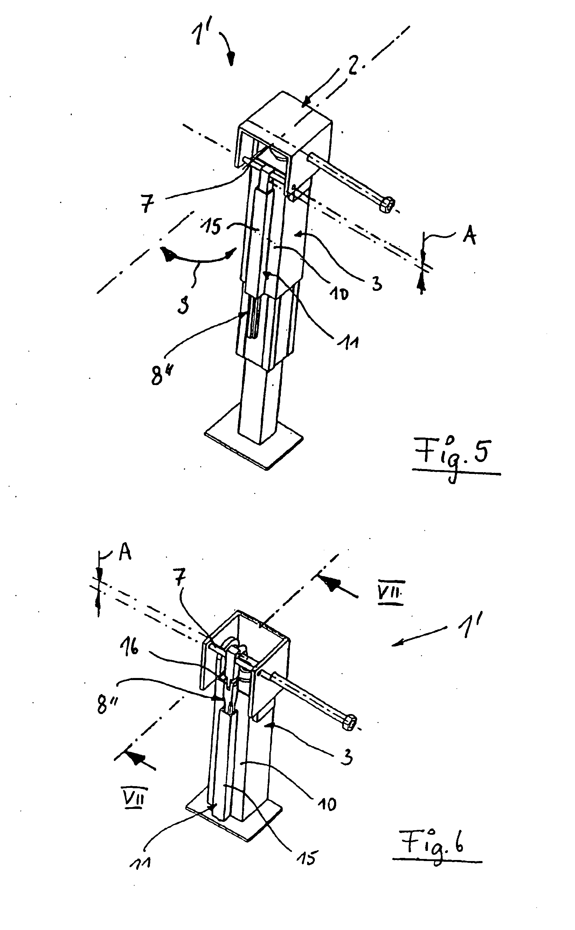

Bei der erfindungsgemäßen Hubstütze 1 ist vorgesehen, daß die Mitnahmevorrichtung 6 mit zumindest einer am äußeren Rohr 3 geführten und am Träger 2 eine Stützachse 7 definierenden Umlenkstange 8, 8' (Fig. 4) versehen ist. Mit dieser Umlenkstange 8 ist eine Linearführung der teleskopierbare Bauteile erreicht, so daß bei Wirkung der Mitnahmevorrichtung 6 in einer Stellphase des Systems eine verbesserte Führung erreicht wird und die Stabilität des Systems sowohl in der Stützstellung (Fig. 1, Fig. 2) als auch beim Schwenkvorgang (Übergang von Fig. 5 nach Fig. 6) der Hubstütze 1 verbessert ist.

In der Ausführung der Hubstütze gemäß Fig. 1 bis 4 ist die Umlenkstange 8, 8' an der Innenseite 9 des äußeren Rohres 3 geführt.

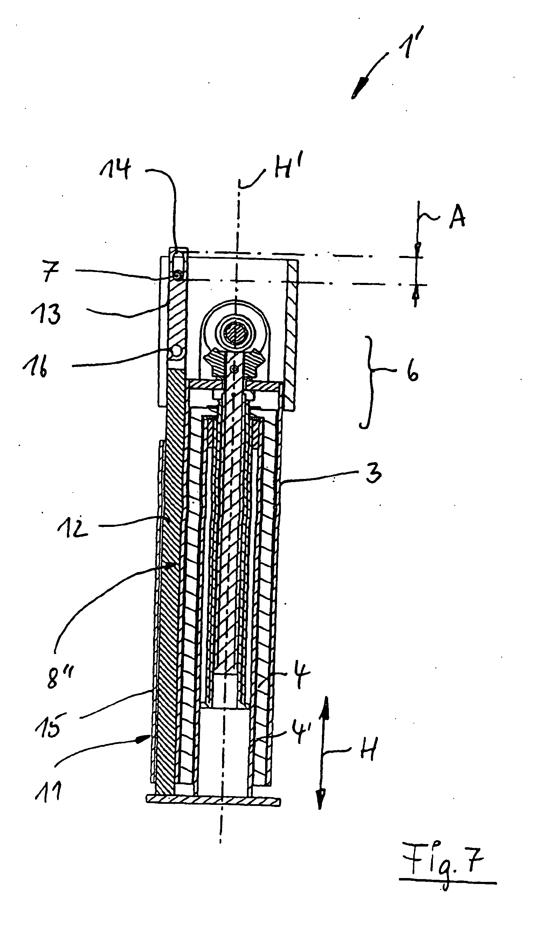

Eine bekannte Ausführung einer Hubstütze 1' gemäß Fig. 5 bis 7 zeigt eine Umlenkstange 8", die an der Außenseite 10 des äußeren Rohres 3 in einen Aufnahmekanal 11 geführt ist. In der dargestellten Ausführung ist der Aufnahmekanal 11 von einem Vierkant-Profilrohr 15 gebildet, in dem die komplementär geformte Umlenkstange 8" geführt wird.

Die Umlenkstange 8" ist in der dargestellten Ausführung gemäß Fig. 5 bis 7 mehrteilig ausgebildet und weist einen unteren Stangenteil 12 und einem mit diesem in einem Gelenk 16 verbundenen Tragteil 13 auf. Dieser Tragteil 13 ist anderenends im Bereich der Stützachse 7 in einem Langloch 14 geführt, so daß zur Bewegungssteuerung eine in Fig. 5 und 6 dargestellte Höhenverlagerung A möglich ist.

## Patentansprüche

1. Höhenverstellbare Hubstütze für insbesondere Wohnmobile, mit einem an dessen Fahrzeugrahmen (R) gehaltenen Träger (2), an dem die ein äußeres Rohr (3) sowie zumindest ein inneres Rohr (4, 4') aufweisende Hubstütze (1, 1') als teleskopierbare Baugruppe schwenkbar gelagert ist, wobei die beidenRohre (3, 4) durch eine eine antreibbare Gewindespindel (5) aufweisende Mitnahmevorrichtung (6) verbunden sind, derart, dass mit dieser Mitnahmevorrichtung (6) die Hubstütze (1, 1') aus einer im wesentlichen horizontalen Ruhestellung zu einer im wesentlichen vertikalen Stützstellung (H') hin verlagerbar und dabei das innere Rohr (4, 4') mittels der Gewindespindel (5) in eine Stützstellung teleskopierbar ist, wobei die Mitnahmevorrichtung (6) mit zumindest einer am äußeren Rohr (3) geführten und am Träger (2) eine Stützachse (7) aufweisenden Umlenkstange (8, 8') versehen ist,
**dadurch gekennzeichnet,**
**dass** sich die Umlenkstange (8, 8') entlang der Innenseite (9) des äußeren Rohres (3) an der Gewindespindel (5) zugewandten Seite erstreckt und an der Innenseite (9) des äußeren Rohres (3) geführt ist.

2. Höhenverstellbare Hubstütze nach Anspruch 1, **dadurch gekennzeichnet, dass** die Mitnahmevorrichtung (6) mittels der eine Linearführung bildenden Umlenkstange (8, 8') die Schwenkung (S) der Hubstütze (1, 1') und die Teleskopierung (H) des inneren Rohres (4, 4') bewirkt.

3. Höhenverstellbare Hubstütze nach Anspruch 1 oder 2, **dadurch gekennzeichnet, dass** die Mitnahmevorrichtung mehrere der Umlenkstangen (8,8') aufweist.

## Claims

1. A height-adjustable lifting prop for in particular mobile homes, with a support (2) which is held on its vehicle frame (R), on which support the lifting prop (1, 1'), which has an outer tube (3) and at least one inner tube (4, 4'), is pivotably mounted as a telescopic assembly, wherein the two tubes (3, 4) are connected by means of a pulling device (6), which has a drivable threaded spindle (5), in such a manner that the lifting prop (1, 1') can be displaced out of an essentially horizontal rest position into an essentially vertical prop position (H') with this pulling device (6), and the inner tube (4, 4') can be telescoped in the process into a prop position by means of the threaded spindle (5), wherein the pulling device (6) is provided with at least one deflection rod (8, 8') which is guided on the outer tube (3) and has a prop axle (7) on the support (2),
**characterised**
**in that** the deflection rod (8, 8') extends along the inner side (9) of the outer tube (3) on the side assigned to the threaded spindle (5) and is guided on the inner side (9) of the outer tube (3).

2. The height-adjustable lifting prop according to claim 1, **characterised in that** the pulling device (6) effects the pivoting (S) of the lifting prop (1, 1') and the telescoping (H) of the inner tube (4, 4') by means of the deflection rod (8, 8'), which forms a linear guide.

3. The height-adjustable lifting prop according to claim 1 or 2, **characterised in that** the pulling device has a plurality of deflection rods (8, 8').

## Revendications

1. Support de levage réglable en hauteur, en particulier pour caravanes, avec un support (2) maintenu sur son châssis de véhicule (R), support sur lequel le support de levage (1, 1') comportant un tube extérieur (3) ainsi qu'au moins un tube intérieur (4, 4') est logé pouvant pivoter en tant qu'ensemble téléscopique, pour lequel les deux tubes (3, 4) sont reliés par un dispositif d'entraînement (6) comportant une tige filetée (5) pouvant être entraînée, de telle manière qu'avec ce dispositif d'entraînement (6), le support de levage (1, 1') peut être déplacé d'une position de repos pour l'essentiel horizontale à une position de support pour l'essentiel verticale (H') et qu'à cette occasion le tube intérieur (4, 4') peut être téléscopé au moyen de la tige filetée (5) dans une position de support, pour lequel le dispositif d'entraînement (6) est doté au moins d'une barre de déflexion (8, 8') guidée sur le tube extérieur (3) et comportant sur le support (2) un axe de support (7),
**caractérisé**
**en ce que** la barre de déflexion (8, 8') s'étend le long du côté intérieur (9) du tube extérieur (3) sur le côté tourné vers la tige filetée (5) et est guidée sur le côté intérieur (9) du tube extérieur (3).

2. Support de levage réglable en hauteur selon la revendication 1, **caractérisé en ce que** le dispositif d'entraînement (6) actionne le pivotement (S) du support de levage (1, 1') et le téléscopage (H) du tube intérieur (4, 4') au moyen de la barre de déflexion (8, 8') formant un guidage linéaire.

3. Support de levage réglable en hauteur selon la revendication 1 ou 2, **caractérisé en ce que** le dispositif d'entraînement comporte plusieurs des barres de déflexion (8, 8').
